# EUROPÄISCHE PATENTSCHRIFT

(11) **EP 3 625 386 B1**
(45) Veröffentlichungstag und Bekanntmachung des Hinweises auf die Patenterteilung: **11.08.2021**
(21) Anmeldenummer: 18729046.5
(22) Anmeldetag: 15.05.2018
(51) Int. Cl.: D04H 1/498, D04H 1/485, D05C 17/02, B60N 3/04, D06N 7/00

(54) **VERFAHREN ZUR HERSTELLUNG EINES NADELVLIES-VELOURS-TEPPICHS**
METHOD FOR PRODUCING A NEEDLE PUNCH VELOUR CARPET
PROCÉDÉ DE FABRICATION D'UN TAPIS EN VELOURS AIGUILLETÉ

(30) Priorität: 16.05.2017 DE 102017208200
(43) Veröffentlichungstag der Anmeldung: 25.03.2020
(73) Patentinhaber: Adler Pelzer Holding GmbH, 58099 Hagen (DE)
(72) Erfinder: LEHMANN, Ralf, 02699 Königswartha (DE); GLASS, Jochen Erhard, 08645 Bad Elster (DE); DICKERT, Matthias, 58454 Witten (DE); SCHULZE, Volkmar, 84069 Schierling (DE)
(74) Vertreter: Bittner, Bernhard
(86) Internationale Anmeldenummer: PCT/EP2018/062579
(87) Internationale Veröffentlichungsnummer: WO 2018/210852

(56) Entgegenhaltungen:
- EP-A1- 0 048 609
- WO-A1-2007/068763
- WO-A1-2009/147051
- WO-A1-2017/042076
- DE-A1-102015 103 116
- DE-U1-202008 007 978
- JP-A- H 082 303
- JP-A- H10 273 860
- JP-A- 2005 261 798
- JP-A- 2016 060 986
- US-A- 2 303 202

## Beschreibung

Die vorliegende Erfindung betrifft ein Verfahren zur Herstellung eines Nadelvlies-Velours-Teppichs mit verschleißfesterer Oberfläche, der gegenüber herkömmlichen Teppichen für den Kraftfahrzeuginnenraum und Gepäckraum vorteilhafte Eigenschaften aufweist.

Üblicherweise ist dem Fahrgast die Nutzschicht von derartig schallisolierenden Bauteilen zugewandt, die aus Garnen oder Fasern und gegebenenfalls einem Träger besteht. Die Fasern können üblicherweise entweder natürlich sein (tierisch: Schurwolle, pflanzlich: Baumwolle oder Jute) oder aber synthetisch (Polyamid, Polyester, Polypropylen). Auch Mischgarne sind möglich, wie beispielsweise Polyamid und Schurwolle.

Bei den auf dem Markt befindlichen Kraftfahrzeugen findet man verschiedene Ausprägungen von Teppichböden, insbesondere Tufting-, Dilour- und Flachnadelvlies-Teppiche, vor. Bei Tufting-Teppichen wird PA6.6, PA6, PP, rPA und rPET; und bei den Dilour- und Flachnadelvlies-Teppichen PET, PET/PP, PP, PA/PET und rPET vorwiegend eingesetzt.

Der Begriff Tufting (engl. to tuft: mit Büscheln verzieren) oder deutsch Tuften ist ein Nähwirkverfahren und bezeichnet eine Technik zur Herstellung dreidimensionaler textiler Flächen. Es ist das weltweit am häufigsten eingesetzte Verfahren zur Herstellung von Teppichböden oder hochwertigen automobilen Innen- und Kofferraumauskleidungen. Das Verfahren eignet sich sowohl zur Produktion von Schlingenware als auch von Veloursware. Tufting funktioniert nach dem Prinzip einer Nähmaschine. Nadeln bringen das sogenannte Polgarn in ein Grundmaterial (Gewebe oder Vlies), den sogenannten Erstrücken bzw. Träger ein. Es erfolgt über die gesamte Breite eine gleichzeitige Bewegung der Nadeln.

Die Nadeln stechen durch das Grundmaterial; bevor die Nadeln wieder zurücklaufen, wird das eingebrachte Polgarn von Greifern festgehalten. So entstehen Schlaufen (Polnoppen) auf der Oberseite des Tuftings.

Auf diese Weise erhält man einen sogenannten Schlingenflorteppich. Werden die Schlingen mit einem Messer aufgeschnitten, so entsteht ein Velours-Teppich (Schnittflorteppich). Das Messer ist häufig bereits am Greifer befestigt, sodass das Halten und Schneiden des Pols in einem Arbeitsgang erfolgt.

Um das eingenadelte Polgarn festzuhalten, muss ein Zweitrücken oder eine Latexierung aufgebracht werden. Diesen Vorgang nennt man Kaschierung oder Einbindung.

Der Tuftingträger bei den Tufting-Qualitäten besteht zumeist aus PET/PP, PET/coPET oder PET/PA. Für die Garn-/Fasereinbindung wird bei Tufting-Teppich vorwiegend EVA und bei den Dilour- und Flachnadelvlies-Teppichen SBR-Latex oder Acrylat eingesetzt. Die Beschichtung, meist als Klebeschicht für Untervliese, aber auch zur Versteifung, umfasst vorwiegend PE oder PP; gegebenenfalls auch Schwerschicht auf der Basis von EVA, PE, PP, EPDM. Auch finden heute PE/PA/PE-Folien Anwendung.

Im Stand der Technik ist darüber hinaus auch ein "einfacheres" Verfahren bekannt, welches ähnliche Teppiche ohne von außen in den Erstrücken eingebrachtes Polgarn herstellt.

Im Gegensatz zum vorgenannten Tuft-Prozess, bei dem Endlosfilamente als Faserrohware eingesetzt werden, werden im Nadelvliesprozess so genannte Stapelfasern, d.h. Schnittfasern mit einer Länge von 30 bis 70 mm, verwendet. In einem ersten Arbeitsgang wird aus diesen Stapelfasern ein Flachnadelvlies hergestellt. Hierfür werden die Stapelfasern vorgeöffnet, gemischt und einer Karde zugeführt. Der vom Tambour der Karde abgenommene Faserflor wird mit Hilfe eines Kreuzlegers mehrfach doubliert bis das gewünschte Flächengewicht erreicht ist und auf einem oder mehreren Nadelstühlen verfestigt. Dabei sind in einem Nadelstuhl ein oder mehrere so genannte Nadelbretter installiert, auf denen die Nadeln über die gesamte Warenbreite (CD) sowie in Warenlaufrichtung (MD) in einem bestimmten Muster gesteckt sind. Die Nadeln durchstechen den doublierten Faserflor, wobei die bis hier parallel vorliegenden Fasern aus der ebenen Orientierung umgelenkt werden. Es kommt zu einer Vielzahl an Umlenk- und Kreuzungspunkten der Stapelfasern. Aufgrund von mechanischer Verhakung, Kreuzung, Verschlaufung und jeweils Reibung an diesen Berührstellen der einzelnen Fasern wird ein mechanischer Zusammenhalt der Stapelfasern erzeugt, welcher maßgeblich die mechanischen Eigenschaften des Nadelvlieses bestimmt. Während dieses Vernadelungsprozesses durchdringen die Nadeln die gesamte Vliesdicke und treten auf der gegenüberliegenden Seite wieder aus. Damit es nicht zu einer Beschädigung der Nadeln beim Durchstechen kommt, laufen Sie dort in eine so genannte Lochplatte mit entsprechenden Aussparungen. Je nach gewünschtem Produkt werden die Anzahl der Nadelstühle, die Anzahl der auf ihnen gesteckten Nadeln, ihre Anordnung relativ zueinander, der Typ der Nadeln, die Vernadelungsrichtung (von oben oder von unten) sowie weitere Parameter variiert und mit einander kombiniert. Am Ende des Prozesses steht ein veloursisiertes Nadelvlies.

Für die Veloursisierung durchstechen hierbei Nadeln ein -flachgenadeltes Nadelvlies- das Flachnadelfaservlies einseitig und ziehen Faserschlingen zwischen die Borsten eines unterhalb des Faservlieses liegenden Bürstenbandes. Die Nadeln tauchen dabei in das Bürstenband ein, welches bei der Rückziehbewegung der Nadeln die ausgestochenen Fasern festhält. Auf der Bürstenseite bildet sich somit die gewünschte Veloursoptik aus. Bei den zum Einsatz kommenden Nadeln kann es sich um seitlich kleine Widerhaken aufweisende Nadeln, sogenannte Kronennadeln, oder um Gabel-ähnliche Enden aufweisende Nadeln, sogenannte Gabelnadeln, handeln.

Nach der Vernadelung wird der Velours durch ein Walzenpaar vom laufenden Bürstenband getrennt. Der Grad der Faserdichte der Sichtseite wird durch die Stichzahl pro Flächeneinheit, die Einstichtiefe der Nadeln in das Faservlies und die Faserfeinheit bestimmt.

Anschließend erfolgt eine Verfestigung der Fasern von der Einstichseite mittels Binder auf Synthese-Kautschuk- oder Acrylat-Basis über unterschiedliche Applikationsverfahren. Weiterhin finden Folien, Vliese, Klebstoffe (hot melts), thermoplastische Kunststoffe (vorwiegend PE) Anwendung; sowie das thermo bonding (Klieverik; EP 1 598 476 B1).

Für latexfreie Einbindungen finden Bindefasern oder thermoplastische Dispersionen Anwendung. Die Faserstärken liegen hierbei üblicherweise zwischen 3,3 und 17 dtex.

Wie beschrieben, wird kein zusätzliches Polgarn von außen in das vorgelegte Vlies, den Erstrücken, eingebracht. Die Gestalt eines Velours-Teppichs wird hierbei dadurch erhalten, dass durch die Nadeln einzelne Fasern aus dem Faservlies in das Bürstenband gestochen werden.

Dieses Verfahren liefert einen Velours-Teppich, bei dem die Ausgangsware ein flachgenadeltes Nadelvlies ist. Wie beschrieben, erhält das flachgenadelte Vlies -in einem zweiten Arbeitsgang- durch Einnadeln desselben in ein Bürstenband seinen Velours-(Dilour-)Charakter.

Im Stand der Technik sind Verfahren zur Herstellung von Velours-Teppichen bekannt, siehe unter anderem DE 44 09 771 A1, EP 0 013 902 A1 und DE 10 2008 026 968 A1, WO 2009/147951 A, JP 2005 261798 A und WO 2007/068763 A.

Bei der Anwendung dieser Teppiche, insbesondere im Fahrgastraum bei der Bodenverkleidung, steht das Verschleißverhalten im Fokus.

Hier die Verschleißfestigkeit im "Taber-Test" (Abriebfestigkeit). Beurteilt werden die Oberfläche (Farbänderung nach Graumaßstab, Beschaffenheit des Faserflauschs) und der Gewichtsverlust bei unterschiedlichen Touren.

Mit dem Taber Abraser lässt sich der Abriebwiderstand verschiedenster Materialien ermitteln. Der Taber Abraser Test ist ein international anerkanntes Prüfverfahren und wird in mehreren nationalen und internationalen Normen genannt (ISO 9352, ASTM D 1044, DIN EN-Norm 438-6). Die Abriebbeanspruchung wird von zwei Reibrollen erzeugt, die mit einer festgelegten Kraft auf den rotierenden Prüfling gedrückt werden. Die Auswertung erfolgt in der Regel über eine Differenzwägung aus dem abgeriebenen Anteil der Probe ermittelt wird. Alternativ zur Gewichtsverlustmethode kann auch die Verschleißtiefe bestimmt werden.

Beeinflusst wird diese Verschleißfestigkeit im Wesentlichen durch die in den drei Fertigungsstufen (Faserherstellung, Nadelvliesveloursherstellung, Bauteilherstellung) eingesetzten Prozesse und ihre Parameter. Mit diesen Prozessparametern werden die Abriebseigenschaften des jeweiligen Zwischen- bzw. Endproduktes bestimmt.

Diese gliedern sich in:
a) Faser (Oberflächeneigenschaften, mechanische, geometrische, physikochemische Eigenschaften)
b) Nadelvliesvelours / Rollenware (Einbindung, Fasermix, Florhöhe, Flordichte)
c) Verformtes Teppichbauteil (Lagenaufbau, Auszugsgrad, Florhöhe, Flordichte).

In praxi zeigt sich jedoch, dass dieses Verschleißverhalten nicht oder sehr selten den heute von den Automobilherstellern geforderten Targets genügt.

Es ist Aufgabe der vorliegenden Erfindung, die Verfahren des Standes der Technik und hier insbesondere das oben geschilderte Verfahren zur Herstellung von Velours-Teppichen dahingehend zu verbessern, dass sich ein Nadelvlies-Velours-Teppich insbesondere in einem Arbeitsgang -bei der Herstellung des "flachgenadelten" Vlieses- herstellen lässt; als dies nach den bisher bekannten Verfahren des Standes der Technik möglich ist. Bei gleichzeitigem Auftragen einer verschleißfestigkeitserhöhenden Beschichtung auf die sogenannte "Polschicht", das heißt die freistehenden Fasern sollte dies möglich sein.

Insbesondere besteht die objektive Aufgabe der Erfindung darin, den Produktionsprozess zur Herstellung eines Nadelvlies-Teppichs zu vereinfachen bzw. effizienter und kostengünstiger zu gestalten, indem für die Vernadelung des voluminösen, instabilen Flächengebildes vom Kardenband lediglich eine Nadeleinheit Verwendung findet.

Gelöst wird die der vorliegenden Erfindung zugrundeliegende Aufgabe durch ein Verfahren zur Herstellung eines Nadelvlies-Teppichs mit velourisierter verschleißfesterer Oberfläche gemäß Anspruch 1.

Die Vernadelung kann mit unterschiedlichen Nadeltypen erfolgen, bei denen die Kerben seitlich in unterschiedlicher Höhe und Anzahl angeordnet sind (Kronennadeln) oder mit einer Kerbe an der Spitze der Nadel (Gabelnadeln).

Durch den Einsatz von Bindefasern (BiCo-Fasern) kann die Faserdichte noch weiter gesteigert werden.

Weiterhin ist es bevorzugt, dass man die Rückseite des Vlieses mit Wasser und/oder einer handelsüblichen Dispersion besprüht oder nur durch Einsatz von Bindefasern und insbesondere spannungslos trocknet. Hierdurch wird der Stand der Fasern fixiert und die Faserdichte erhöht. Gleichzeitig werden die Fasern eingebunden.

Erfindungsgemäß wird nach der Vernadelung, bei der Einbindung mittels Binder auf Synthese-Kautschuk- oder Acrylat-Basis, vorzugsweise durch Foulardieren das Beschichtungsmittel auf der Pol-/Teppichsicht-Seite aufgeschäumt.

Der Auftrag des Beschichtungsmittels kann beispielsweise durch Sprühen erfolgen.

Ungeachtet der Art der Fasereinbindung muss der Auftrag des Beschichtungsmittels stets vor dem Einbringen des Teppichs in den Trocken-/Vernetzungsprozess erfolgen.

Weiterhin ist es bevorzugt, dass man die Polseite des Vlieses zur Aufstellung der Fasern gegen den Strich bürstet und überstehende Fasern abschert. Dadurch wird der Stand der Fasern noch einmal zusätzlich fixiert und die Oberfläche des Nadelvlies-Velours-Teppichs deutlich geglättet, was insbesondere für Anwendungen von Bedeutung ist, bei denen die Polseite die Sichtseite des Nadelvlies-Velours-Teppichs darstellt. Bevorzugt setzt man eine Polfasermischung ein, welche Fasern aus Polypropylen (PP), Polyester (PET), Polyamid (PA) oder deren Mischungen umfasst. Diese können einen Recyclinganteil aufweisen; insbesondere bei PET-Fasern kann der Recyclinganteil auch 100% betragen.

Der jeweilige Vorteil der Fasern und/oder Fasermischungen liegt je nach Anwendung im Preis, in der Lichtechtheit oder im Verschleiß- und Reinigungsverhalten.

Des Weiteren setzt man unterschiedliche Fasertiter ein, insbesondere Fasern, deren Feinheit in einem Bereich von 3,3 bis 17 dtex liegt. Die Auswahl des Fasermixes ist abhängig vom späteren Einsatz des Nadelvlieses. Bei geringen Fasereinsatzgewichten (300 bis 400g/m² sollte man mit Fasern bis 6,7 dtex arbeiten, um ein genügend dichtes Vlies zu erreichen

Der jeweilige Vorteil liegt in der höheren Dichte bei geringerem Fasereinsatzgewichten [bei einem Dilour benötigt man ca. 10% höheren Fasereinsatz; d.h. ein Dilour mit 500 g/m² Endgewicht, hat ein Fasereinsatzgewicht von 550 g/m² bei der Herstellung des Flachnadelvlieses], in der verbesserten Reinigungsfähigkeit und in der Verbesserung der Abriebwerte.

Nur wenn die Fasermischung homogen, die Abtafelung durch den Kreuzleger exakt und der Verzug der Nadelmaschine auf das Produkt angepasst ist, kann man von einer guten Qualität der flachgenadelten Ware oder von einem guten flachgenadelten Vlies sprechen.

Um eine isotrope Festigkeitseigenschaft zu erreichen, kann das Vlies bereits nach der Krempel leicht gestaucht werden; und wird vor oder nach dem Vernadeln verstreckt; um die Fasern umzuorientieren, so dass ein Festigkeitsverhältnis längs/quer von 1 bis 1,2 oder 1 bis 1,4 vorliegt.

Es dient dem höheren Fasertransport während der Vernadelung, sowie der besseren Dehneigenschaften im Verformprozess.

Das erfindungsgemäße Verfahren soll beispielhaft erläutert werden.

### Ausführungsbeispiele:

Anhand des oben beschriebenen Verfahrens wurde ein handelsüblicher 370 g/m² PET-Faser-Teppich mit 80g/m² einer handelsüblichen Acrylat-Einbindung mit veloursisierter Oberfläche und Beschichtung hergestellt.

Als Beschichtung wurde eine Mischung aus Wachs- und Polymerdispersion mittels Foulard vor dem Eintreten des Teppichs in den Trockenofen polseitig aufgetragen; Nassauftrag 110g/m².

Für diese Beschichtung wurde eine Mischung mit folgenden Inhaltsstoffen hergestellt:

| | |
|---|---|
| 79,44 Gew. % | Wasser |
| 19,86 Gew. % | Wachs-/ Polymerdispersion* |
| 0,70 Gew. % | Seife |

| | |
|---|---|
| * Tubicoat TAB der CHT R. Beitlich GmbH, Tübingen, DE | |

Die Anlagengeschwindigkeit betrug 6 m/min, die Temperatur im Trockenofen 150°C.

In der folgenden Tabelle 1 ist der erhaltene Teppich mit velourisierter und beschichteter Oberfläche einem Flachnadelvlies des Standes der Technik gegenübergestellt.

Die Pfeile stellen einen Vergleich der erfindungsgemäßen Materialien mit denen des Standes der Technik dar. Es bedeuten (jeweils bezogen auf ähnliche Polgewichte):

| | | |
|---|---|---|
| ⇒ | gleich gut | + besser |
| ⇑ | besser | - gleich |
| ⇓ | schlechter | - - schlechter |

Wie aus dieser Tabelle ersichtlich ist, weisen die nach dem erfindungsgemäßen Verfahren hergestellten Nadelvlies-Velours-Teppichmaterialien durchweg günstigere Eigenschaften auf, als dies bei den Materialien des Standes der Technik der Fall ist.

**Tabelle 1:**

| | Teppichs mit veloursisierter, beschichteter Oberfläche | Flachnadelvlies |
|---|---|---|
| Feinfaser | - ⇒ | - |
| Faserdichte | - ⇒ | - |
| Faserstand | + ⇑ | - - |
| Abrieb | + ⇑ | - |
| Reinigung | + ⇑ | - - |
| Auszugsgrad | + ⇑ | - - |
| Aufzeilung | + ⇑ | - - |
| Preis | - => | - |

Die Oberflächenbeurteilung nach Taber-Test ist beim Nadelvlies-Teppich mit veloursisierter, beschichteter Oberfläche eine Note besser gegenüber dem Flachnadelvlies, der Gewichtsverlust beträgt 0,14g.

| Prüfbedingungen in Anlehnung an DIN 53 754 | | |
|---|---|---|
| nach PrA-014 | Zyklen N | 1000 |
| | Drehzahl n | 60 min⁻¹ |
| | Belastung F | 2 x 1000 g |
| | Reibrad Typ | H18 |
| Sollwerte: | Abrieb | ≤ 0,5 |

Da heute mehr und mehr das Emissions-Verhalten von Bauteilen in den Fokus rückt, wurde auch das untersucht:
Die Prüfergebnisse Fogging (PV 3015), Geruch C2 und C3 (PV 3900) und Formaldehydemission (PV 3929) lagen bei den erfindungsgemäßen Teppichen deutlich unterhalb der Grenzwerte.

Des Weiteren wurde der Teppich im sogenannten Absatztest geprüft. Hierbei wird das Scheuerverhalten bei vorgegebenen Hin- und Herbewegungen eines Absatzes (Stahlabsatz) geprüft.

Die Ergebnisse im Trocken- und Naßtest entsprachen den Anforderungen der in den Prüfvorschriften der Automobilhersteller festgeschriebenen Targets.

Auch bei der Anwendung des erfindungsgemäßen Verfahrens mit der Wachs-/Polymerdispersions-Beschichtung bei einem 560 g/m² PET-Faser-Teppich mit 80g/m² Acrylat-Einbindung zeigte dieser Teppich deutliche Unterschiede im Verschleißverhalten gegenüber einem Standard-Dilour-Teppich: Gewichtsverlust 0,18g und eine bessere Note in der Oberflächenbeurteilung .

Bei den Anwendungsbeispielen zeigte sich auch eine deutliche Verbesserung des Eindrückverhaltens nach DIN ISO 3415.

## Patentansprüche

1. Verfahren zur Herstellung eines Nadelvlies-Teppichs mit veloursisierter verschleißfester Oberfläche,
in dem das voluminöse, instabile Flächengebilde vom Kardenband in der Nadeleinheit vernadelt und veloursisiert wird, **gekennzeichnet dadurch, dass**
a.) das Fasereinsatzgewicht 240 bis 600 g/m² beträgt,
b.) die Ausstichseite eine Einstichtiefe von 2 bis 13 mm aufweist
c.) nur eine Nadeleinheit mit Nadeln eingesetzt wird, bei denen die Kerben in unterschiedlicher Höhe und Anzahl angeordnet sind,
d.) die Nadeldichte mindestens 9000/m² und,
e.) die Stichdichte 200 bis 750 Stiche/cm² beträgt
wobei vor dem Eintreten des Teppichs in einen Trocknungs-/Vernetzungsprozess der Teppich polseitig mit einer Mischung aus Wachs- und Polymerdispersion beschichtet wird.

2. Verfahren nach Anspruch 1, **dadurch gekennzeichnet, dass** die Beschichtung eine Wachs-Silikonöl-Emulsion ist.

3. Verfahren nach Anspruch 1, **dadurch gekennzeichnet, dass** die Beschichtung einen modifizierten Fettsäureester umfasst.

4. Verfahren nach einem der Ansprüche 1 bis 3, **dadurch gekennzeichnet, dass** die Beschichtung mittels Foulard- oder Sprühverfahren erfolgt.

## Claims

1. Method for producing a needle punch carpet having a velourized and more wear-resistant surface,
in which the bulky unstable sheet is needled and velourized by a carding belt in the needling unit,
**characterized in that**
a.) the fiber working weight is from 240 to 600 g/m²,
b.) the stitch-out side has a penetration depth of from 2 to 13 mm,
c.) only a needle unit with needles is used in which the notches are arranged in different heights and numbers,
d.) the needle density is at least 9000/m² and
e.) the stitch density is from 200 to 750 stitches/cm²,
wherein before being subjected to a drying/cross-linking process, the carpet is coated with a mixture of wax and polymer dispersion on the stitch-out side.

2. Method according to claim 1,
**characterized in that**
the coating is a wax/silicone oil emulsion.

3. Method according to claim 1,
**characterized in that**
the coating comprises a modified fatty acid ester.

4. Method according to claim 1 to 3,
**characterized in that**
the coating takes place by a padding or spraying method.

## Revendications

1. Procédé de fabrication d'un tapis aiguilleté avec une surface enduite de velours et résistante à l'usure,
dans lequel la structure plate volumineuse et instable est aiguilletée et fabriquée en velours à partir du ruban de carde dans l'unité d'aiguille, **caractérisé en ce que**
a) le poids d'entrée de fibre est de 240 à 600 g/m²,
b) le côté découpé a une profondeur de pénétration de 2 à 13 mm,
c) une seule unité d'aiguille est utilisée avec des aiguilles dans lesquelles les encoches sont disposées à des hauteurs et en nombre différents,
d) la densité d'aiguille est d'au moins 9000/m²,
e) la densité de point est de 200 à 750 points/cm²,
dans lequel, avant que le tapis n'entre dans un processus de séchage/maillage, le côté velours du tapis est enduit d'un mélange de cire et de dispersion de polymère.

2. Procédé selon la revendication 1,
**caractérisé en ce que**
le revêtement est une émulsion d'huile-silicone et de cire.

3. Procédé selon la revendication 1,
**caractérisé en ce que**
le revêtement comprend un ester d'acide gras modifié.

4. Procédé selon l'une des revendications 1 à 3,
**caractérisé en ce que**
le revêtement est réalisé au moyen d'un procédé de foulardage ou de pulvérisation.
